# EUROPÄISCHE PATENTSCHRIFT

(11) **EP 3 578 035 B1**
(45) Veröffentlichungstag und Bekanntmachung des Hinweises auf die Patenterteilung: **06.04.2022**
(21) Anmeldenummer: 19178026.1
(22) Anmeldetag: 04.06.2019
(51) Int. Cl.: A01F 15/08

(54) **RUNDBALLENPRESSE UND ENTLADEVERFAHREN**
ROUND BALER AND DISCHARGING METHOD
PRESSE À BALLES RONDES ET PROCÉDÉ DE DÉCHARGEMENT

(30) Priorität: 05.06.2018 DE 102018208821
(43) Veröffentlichungstag der Anmeldung: 11.12.2019
(73) Patentinhaber: Deere & Company, Moline, IL 61265 (US)
(72) Erfinder: Gresset, Pascal, 68163 Mannheim (DE); Perrotin, Frederic, 68163 Mannheim (DE); Repecaud, Romain, 68163 Mannheim (DE)
(74) Vertreter: Reichert, Christian

(56) Entgegenhaltungen:
- WO-A1-2017/205712
- GB-A- 2 292 335
- NL-A- 2 016 842
- US-A1- 2016 014 967
- US-B2- 8 978 549

## Beschreibung

Die Erfindung betrifft eine Rundballenpresse gemäss dem Oberbegriff des unabhängigen Anspruchs 1 und ein Entladeverfahren zum Entladen eines Rundballens einer Rundballenpresse gemäss dem Oberbegriff des unabhängigen Anspruchs 7.

Rundballenpressen sind bekannt. Dabei wird in Rundballenpressen landwirtschaftliches Erntegut, beispielsweise Stroh, Gras oder Getreide zu einem Rundballen geformt und mit einem Umwicklungsmaterial, beispielsweise Netz, Folie oder Bindegarn, umwickelt.

Derartige Rundballenpressen weisen eine Aufnahme- und Zuführeinrichtung für das zu pressende Erntegut auf, durch welche das Erntegut in eine Zuführöffnung einer Ballenpresskammer eingeführt wird. Die Rundballenpresse kann ausserdem ein Gehäuse umfassen, wobei das Gehäuse insbesondere zweigeteilt ausgebildet sein kann. Das Gehäuse kann ausserdem auf einem Fahrgestell angeordnet sein.

Die Ballenpresskammer umfasst eines oder mehrere Pressmittel, die auf oder an dem Gehäuseteil und der Auswurfklappe verteilt sind und die Ballenpresskammer umfangsseitig begrenzen. Mittels des Pressmittels ist eine rotationserzeugende oder rotationserhaltende Eingriffswirkung auf einen in der Ballenpresskammer befindlichen Rundballen erzeugbar. Nach dem Ende eines Pressvorgangs, also wenn der Rundballen die erforderliche Grösse erreicht hat und entladen werden kann, rollt der fertig gepresste Rundballen dann auf einer Entladevorrichtung, beispielsweise einer Abladerampe, aus der Ballenpresskammer nach unten auf den Boden.

Bekannte Entladevorrichtung umfassen einen langgestreckten, als Schweißzusammenbau ausgeführten Träger, der am Gehäuse oder Fahrwerk der Rundballenpresse um eine horizontale, quer zur Vorwärtsrichtung der Rundballenpresse verlaufende Achse schwenkbar angelenkt und durch Federkraft nach oben vorgespannt ist (vgl. DE 102 54 954 A1 oder EP 0 288 600 A1). Wird der Ballen ausgeworfen, bewegt sich der Träger gegen die Kraft der Feder nach unten. Zusätzlich sind vielfach noch Schwingungsdämpfer vorgesehen, um die Schwingungen der Entladevorrichtung beim Aufprall auf dem Boden oder nach der Rückkehr in die obere Ruheposition nach der Ballenabgabe zu dämpfen. Die US 8,978,549 B2 offenbart eine Ballendrehvorrichtung zur Befestigung an einer Ballenpresse, mit einem ersten und zweiten Tragarm und einen Aktor, die verstellbar an der Rundballenpresse gelagert sind. Der erste und zweite Tragarm sind mittels des Aktors verstellbar. Ein wesentliches Problem beim Entladen eines Rundballens aus der Ballenkammer über die Entladevorrichtung ist die Kontrolle über die Entladerichtung, also die Richtung in die der Rundballen abgelegt werden soll. Bekannten Entladevorrichtungen und Rundballenpressen sind konstruktiv aufwändig ausgestaltet und/oder nicht dazu ausgelegt, die Bewegung und die Entladerichtung des Rundballens zu kontrollieren oder den Rundballen gezielt und kontrolliert in mehrere festgelegte Entladerichtung zu entladen, sondern ermöglichen lediglich das Entladen des Rundballens in eine Entladerichtung, nämlich hinter der Rundballenpresse. Darüber hinaus kann es sein, dass der Rundballen nicht weit genug von der Rundballenpresse wegrollt, sodass die Auslassklappe nicht abgesenkt und die Ballenkammer nicht geschlossen werden kann. Oder, der Rundballe wird zu sehr verkippt und bleibt ggf. auf der Fahrachse oder sonstigen Querstreben sitzen und rollt nicht die Entladevorrichtung hinunter, oder seine Drehrichtung kehrt sich um, und auf ihm aufgewickeltes Garn fällt von dem herunter rollenden Rundballen herab.

Weitere Rundballenpressen sind aus US 2016/014967 A1, GB 2 292 335 A und WO 2017/205712 A1 bekannt.

Im Weiteren ist das sichere Entladen des fertig gepressten Rundballens, insbesondere in abschüssigem und/oder hügeligem Gelände, ein wesentliches Problem beim Entladen. Wird der Rundballen in einem abschüssigem und/oder hügeligem Gelänge entladen, rollt er ggf. unkontrolliert und ungewollt weiter, z.B. einen Hang abwärts, wodurch die Unfallgefahr erhöht wird. Aus diesem Grund kann es sein, dass der Bediener der Rundballenpresse in abschüssigem und/oder hügeligem Gelände das Sammeln des Ernteguts am aktuellen Arbeitsort zunächst unterbrechen muss, um einen geeigneten Lagerort für den Rundballen zu suchen, insbesondere ein flaches Gelände, dann den geeigneten Lagerort anfahren muss, um dort den Rundballen zu entladen, und erst anschliessend wieder an den aktuellen Arbeitsort zurückzukehren kann. Dieser Vorgang ist sehr zeitaufwändig und mit erheblichem Aufwand verbunden.

Ausgehend von diesem Stand der Technik ist es daher eine Aufgabe der vorliegenden Erfindung eine Rundballenpresse und ein Entladeverfahren vorzuschlagen, die die aus dem Stand der Technik bekannten Nachteile weitgehend vermeiden. Insbesondere wird das der Erfindung zugrundeliegende Problem darin gesehen, das Entladen des Rundballens, insbesondere die Entladerichtung und/oder die Bewegung des Rundballens, zu kontrollieren und/oder ein sicheres Entladen des Rundballens zu ermöglichen, bevorzugt in hügeligem und/oder abschüssigem Gelände.

Diese Aufgabe wird durch eine Rundballenpresse mit den Merkmalen des Anspruchs 1 und ein Entladeverfahren zum Entladen eines Rundballens einer Rundballenpresse mit den Merkmalen des Anspruchs 7 gelöst.

Die abhängigen Ansprüche beziehen sich auf besonders vorteilhafte Ausführungsformen der Erfindung.

Erfindungsgemäß wird eine Rundballenpresse mit einer Entladevorrichtung zum Entladen eines Rundballens vorgeschlagen. Die Entladevorrichtung umfasst einen ersten Tragarm zur Entladung eines Rundballens und einen zweiten Tragarm zur Entladung eines Rundballens und einen Aktor. Der erste und zweite Tragarm sind verstellbar an einer Rundballenpresse lagerbar und der erste und zweite Tragarm sind mittels des Aktors in Abhängigkeit von einer Entladerichtung eines Rundballens verstellbar.

Wesentlich für die Erfindung ist die spezielle Ausbildung und Einstellbarkeit der Entladerichtung mittels des Aktors und des ersten und zweiten Tragarms. Diese bewirkt, dass der Ablageort und/oder die Ablageart des fertig gepressten Rundballens mittels der Entladevorrichtung in Abhängigkeit von der Entladerichtung frei gewählt werden kann. Der fertig gepresste Rundballen kann somit in Richtung oder entlang einer Längsachse der Rundballenpresse, also hinter der Rundballenpresse, abgelegt, also entladen bzw. einfach nur abgerollt werden, und/oder in eine erste oder zweite Richtung in Richtung einer Querachse der Rundballenpresse abgelegt, insbesondere abgerollt und gekippt werden, im Speziellen seitlich der Rundballenpresse abgelegt werden. Die Querachse kann dabei quer zur Längsachse verlaufen. Im Speziellen kann eine Fahrachse der Rundballenpresse entlang der Querachse und/oder parallel zur Querachse ausgerichtet sein.

Mit anderen Worten, der Rundballen kann nach dem oder beim Verlassen der Ballenpresskammer von der Entladevorrichtung aufgenommen und mit der Entladevorrichtung in mindestens drei Entladepositionen bewegt und entladen werden. Eine Bewegung des ersten und zweiten Tragarms in Abhängigkeit von der Entladerichtung hat somit den Vorteil, dass der Rundballen nicht nur hinter der Rundballenpresse abgelegt werden kann, sondern der Rundballen auch in eine erste und zweite Richtung gekippt und abgelegt werden kann. Der Rundballen kann also mittels der Entladevorrichtung so auf den Boden abgelegt werden wie er von der Ballenpresskammer angenommen wurde oder aber die Längsmittenachse des Rundballens kann um 90 Grad, insbesondere in der Horizontalen, geschwenkt werden und der Rundballen auf seiner Stirnseite seitlich abgelegt werden. Ausserdem kann aufgrund des Kippens des Rundballens in die erste oder zweite Richtung eine Wegrollbewegung zuverlässig vermieden werden, insbesondere in abschüssigem und/oder hügeligem Gelände, sodass der Rundballen zum Beispiel einen Hang nicht hinab rollt. Dadurch wird die Unfallgefahr reduziert. Es wird also ein sicheres und einfaches Ablegen des Rundballens, insbesondere auch in abschüssigem und/oder hügeligem Gelände, ermöglicht. Im Weiteren ist die Entladevorrichtung konstruktiv einfach ausgestaltet und kostengünstig herstellbar und man erspart sich aufwändige und konstruktiv komplexe Vorrichtungen zum Entladen des Rundballens. Da der Rundballen ohne aufwändiges Unterbrechen des Sammelvorgangs, also ohne Zeitverlust, direkt am Arbeitsort abgeladen werden kann, wird auch die Standzeit der Rundballenpresse deutlich verkürzt und der Entladevorgang wird wenig aufwändig ausgestaltet. Es können also mehr Rundballen pro Zeiteinheit eingefahren werden. Die Entladevorrichtung kann ausserdem nachträglich an bestehende Rundballenpressen verschiedenster Bauart angebaut werden kann.

Der erste und zweite Tragarm können bevorzugt als ein erster langgestreckter Tragarm und zweiter langgestreckter Tragarm ausgebildet sein und/oder teilweise oder über eine gesamte Länge des jeweiligen Tragarms in Richtung der jeweiligen Tragarmlängsachse als Abrollfläche für den aus der Rundballenpresse ausgeworfenen Rundballen auf den Boden dienen. Der erste und zweite Tragarm können aus einem starren Material, beispielsweise einem Metall oder Kunststoff sein und/oder aus einem in sich federnden Material bestehen, beispielsweise Federstahl, Kunststoff oder Gummi. Es wäre auch denkbar, dass nur Anteile des Tragarms aus in sich federndem Material sind und zwischen in sich starren Anteilen des Trägers angeordnet sind. Der erste Tragarm und der zweite Tragarm, der insbesondere vom ersten Tragarm verschieden ist, können einstückig sein oder mehrere Elemente umfassen und/oder teleskopisch ausgebildet sein, also über eine Basislänge hinaus ausziehbar und/oder verlängerbar sein. Der erste und zweite Tragarm können röhrenförmig, insbesondere hohl- und/oder vollzylinderförmig sein, beispielsweise als ein Hohlzylinder oder eine Rohr mit geschlossenen Enden ausgebildet sein. Der erste und zweite Tragarm können in eine radiale Richtung, also radial zur jeweiligen Tragarmlängsachse, einen kreisförmigen und/oder elliptischen und/oder dreieckigen und/oder rechteckigen und/oder polygonförmigen Querschnitt aufweisen.

Der Aktor kann beispielsweise ein Stellmotor, beispielsweise ein Elektromotor oder ein Hydraulikmotor oder ein Pneumatikmotor oder dergleichen sein. Unter verstellbar kann einstellbar und/oder schwenkbar verstanden werden. Der erste und zweite Tragarm können verstellbar in Richtung oder entlang der Querachse und/oder Fahrachse sein und/oder in Richtung oder entlang quer zur Fahrachse und gleichzeitig quer zur Längsachse der Rundballenpresse. Im Speziellen, können der erste und zweite Tragarm in einem ebenen Gelände horizontal und/oder vertikal verstellbar sein. Unter quer kann im Folgende verstanden werden, dass zwei Achsen, beispielsweise die Querachse und/oder die Längsachse und/oder eine erste und zweite Lagerachse, einen Winkel von 60 Grad bis 120 Grad, bevorzugt 80 Grad bis 100 Grad, im Speziellen genau einen Winkel von 90 Grad zueinander einschliessen. Die erste und zweite Lagerachse können auch quer zur Querachse und/oder quer zur Längsachse angeordnet sein.

In Ausgestaltung der Erfindung sind der erste Tragarm um eine erste Lagerachse und der zweite Tragarm um eine zweite Lagerachse schwenkbar an der Rundballenpresse lagerbar, im Speziellen gelagert. Der erste und zweite Tragarm können zusätzlich um die Querachse der Rundballenpresse, insbesondere um die Fahrachse, schwenkbar an der Rundballenpresse lagerbar, im Speziellen gelagert sein. Der erste Tragarm kann mittels eines ersten Lagers und der zweite Tragarm kann mittels eines zweiten Lagers um die erste und zweite Lagerachse und/oder um die Querachse oder Fahrachse an der Rundballenpresse, insbesondere an einem Fahrgestell und/oder an der Fahrachse und/oder einem Gehäuse der Rundballenpresse, schwenkbar angeordnet sein, im Speziellen schwenkbar befestigbar oder befestigt sein. Das erste und zweite Lager dienen somit der verstellbaren Anlenkung des ersten und zweiten Tragarms in Richtung oder entlang der Querachse bzw. Fahrachse und/oder quer zur Längsachse an der Rundballenpresse, also der Befestigung und Anlenkung der Entladevorrichtung an der Rundballenpresse. Mit anderen Worten, der erste und zweite Tragarm können sich unabhängig voneinander bewegen, bevorzugt unabhängig voneinander um die Querachse bzw. Fahrachse und/oder erste und zweite Lagerachse rotieren. Somit kann vorteilhafterweise eine sich überlagernde zweidimensionale Schwenkbewegung des ersten und zweiten Tragarms, im Speziellen eine sich überlagernde horizontale und vertikale Bewegung erzielt werden und das Entladen des Rundballens in verschiedene Entladerichtungen wird ermöglicht.

In Ausgestaltung der Erfindung sind der erste und zweite Tragarm, insbesondere mittels des Aktors, zwischen einer ersten Entladeposition und einer zweiten Entladeposition und einer dritten Entladeposition beweglich oder verstellbar. In der ersten Entladeposition sind der erste und zweite Tragarm in Richtung oder entlang der Längsachse der Rundballenpresse ausgerichtet, insbesondere quer zur Querachse und quer zur ersten und zweiten Lagerachse ausgerichtet. In der zweiten Entladeposition sind der erste und zweite Tragarm in eine erste Richtung in Richtung oder entlang der Querachse verstellt, insbesondere ausgerichtet und/oder geschwenkt, und in der dritten Entladeposition sind der erste und zweite Tragarm in eine zweite Richtung, die zur ersten Richtung entgegengesetzt ist, in Richtung oder entlang der Querachse verstellt, insbesondere ausgerichtet und/oder geschwenkt.

In Ausgestaltung der Erfindung sind der erste und zweite Tragarm mittels des Aktors derart einstellbar, dass der erste und zweite Tragarm in der ersten Entladeposition sind, insbesondere der Aktor den ersten und zweiten Tragarm in der ersten Entladeposition hält, wenn der Rundballen in Richtung oder entlang der Längsachse entladen wird, sodass der Rundballen mittels des ersten und zweiten Tragarms entlang der Längsachse auf den Boden abgerollt wird, und/oder der Aktor den ersten und zweiten Tragarm, insbesondere von der ersten Entladeposition, in die zweite Entladeposition bewegt, insbesondere schwenkt und hält, sodass der Rundballen mittels des ersten und zweiten Tragarms auf den Boden abgerollt und in eine zweite Richtung gekippt wird, wenn der Rundballen in die zweite Richtung entladen wird, und/oder der Aktor den ersten und zweiten Tragarm, insbesondere von der ersten Entladeposition, in die dritte Entladeposition bewegt, insbesondere schwenkt und hält, sodass der Rundballen mittels des ersten und zweiten Tragarms auf den Boden abgerollt und in eine erste Richtung gekippt wird, wenn der Rundballen in die erste Richtung entladen wird. Somit kann der Rundballen vorteilhafterweise in mindestens drei Entladerichtungen entladen werden, also nicht nur in Richtung der Längsachse der Rundballenpresse, sondern kann auch in die erste und/oder zweite Richtung gekippt werden.

In Ausgestaltung der Erfindung sind der erste und zweite Tragarm mittels des Aktors derart einstellbar sind, dass der erste und zweite Tragarm in der ersten Entladeposition nur um die Querachse, insbesondere Fahrachse, schwenkbar ist und/oder in der zweiten Entladeposition nur der erste Tragarm schwenkbar ist, insbesondere nur um die Querachse oder Fahrachse und/oder die erste Lagerachse schwenkbar ist, und/oder in der dritten Entladeposition nur der zweite Tragarm schwenkbar ist, insbesondere nur um die Querachse oder Fahrachse und/oder die zweite Lagerachse schwenkbar ist. Mit anderen Worten, in der ersten Entladeposition können der erste und zweite Tragarm also derart eingestellt werden, insbesondere ausgerichtet und gehalten werden, dass diese nur um die Querachse oder Fahrachse und nicht um die erste und zweite Lagerachse, im Speziellen also nur in eine vertikale Richtung schwenkbar sind. In der zweiten Entladeposition können der erste und zweite Tragarm derart eingestellt, insbesondere ausgerichtet und/oder gehalten werden, dass nur der erste Tragarm schwenkbar ist und der zweite Tragarm weder um die Querachse noch um die zweite Lagerachse schwenkbar ist. Mit anderen Worten, in der zweiten Entladeposition kann der erste Tragarm während des Entladevorgangs mittels des Aktors derart eingestellt werden, dass dieser eine unabhängige Rotationsbewegung um die Querachse oder Fahrachse und/oder die erste Lagerachse ausführen kann, während der zweite Tragarm mittels des Aktors in der zweiten Entladeposition festhaltbar ist bzw. festgehalten wird. Dadurch kann vorteilhafterweise ein Kippen des Rundballens in die zweite Richtung erreicht werden. In der dritten Entladeposition können der erste und zweite Tragarm also derart eingestellt, insbesondere ausgerichtet und/oder gehalten werden, dass nur der zweite Tragarm schwenkbar ist und der erste Tragarm weder um die Querachse noch um die erste Lagerachse schwenkbar ist. Mit anderen Worten, in der dritten Entladeposition kann der zweite Tragarm während des Entladevorgangs mittels des Aktors derart eingestellt werden, dass dieser eine unabhängige Rotationsbewegung um die Querachse oder Fahrachse und/oder die zweite Lagerachse ausführen kann, während der erste Tragarm mittels des Aktors in der dritten Entladeposition festhaltbar ist bzw. festgehalten wird. Dadurch kann vorteilhafterweise ein Kippen des Rundballens in die erste Richtung erreicht werden.

In Ausgestaltung der Erfindung ist der erste Tragarm in einen ersten Abrollschenkel zum Abrollen des Rundballens und einen ersten Wirkschenkel unterteilt und der zweite Tragarm in einen zweiten Abrollschenkel zum Abrollen des Rundballens und einen zweiten Wirkschenkel unterteilt. Im Speziellen unterteilt die erste Lagerachse den ersten Tragarm in den ersten Abrollschenkel und den ersten Wirkschenkel und die zweite Lagerachse den zweiten Tragarm in den zweiten Abrollschenkel und den zweiten Wirkschenkel. Der Aktor kann am ersten und zweiten Wirkschenkel, bevorzugt an einem jeweiligen Ende des ersten und zweiten Wirkschenkels, angeordnet, insbesondere mit dem ersten und zweiten Wirkschenkel wirkverbunden und/oder am ersten und zweiten Wirkschenkel verstellbar befestigt sein, sodass der erste und zweite Tragarm mittels des Aktors verstellbar sind. Der erste und zweite Abrollschenkel können an einer Oberseite des jeweiligen Tragarms eine Abrollfläche aufweisen.

In Ausgestaltung der Erfindung weist der erste und/oder zweite Abrollschenkel einen Radius auf, insbesondere können der erste und zweite Abrollschenkel C-förmig ausgebildet sein. Dadurch kann der Rundballen mit dem ersten und/oder zweiten Tragarm sicher und eingriffsfest entladen und gekippt werden.

Die Rundballenpresse kann eine größenunveränderliche Ballenpresskammer umfassen.

Hierbei kann das Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfklappe auf einem Kreisbogen liegen und wenigstens eine der Pressrollen kann angetrieben sein. Die Anordnung der Pressrollen im Ballenpressraum kann einer Zylinderform entsprechen, sodass die Pressrollen zylindrisch um den Rundballen angeordnet sind und eine zylindrische Umfangsfläche ausbilden. Alternativ kann die Rundballenpresse auch mit einer größenveränderlichen Ballenpresskammer bzw. als Rundballenpresse mit variabler Ballenpresskammer ausgebildet sein, wobei die Pressmittel dann als Riemen, Gurte oder Kettenanordnungen ausgebildet sein können. Die Rundballenpresse kann eine Auswurfklappe umfassen. Die Auswurfklappe kann mittels einer Stelleinrichtung zwischen einer Entladestellung, in der die Auswurfklappe geöffnet ist und eine Auswurföffnung freigibt, und einer Schliessstellung beweglich sein, in der die Auswurfklappe geschlossen ist. Die Stelleinrichtung kann dabei als Motor ausgebildet sein.

Auf diese Weise kann der Rundballen nach dem oder beim Verlassen der Presskammer von der Entladevorrichtung aufgenommen und mit dieser vom Ballenpressraum in mindestens drei Entladerichtungen wegbewegt und entladen werden. Eine Bewegung des ersten und zweiten Tragarms in Abhängigkeit von der gewünschten Entladerichtung hat den Vorteil, dass der Rundballen in mehrere Entladerichtung abgelegt werden kann. Der Rundballen kann also mittels der Rundballenpresse so auf den Boden abgelegt werden wie er von der Ballenpresskammer angenommen wurde oder aber seine Längsmittenachse kann um 90 Grad in der Horizontalen geschwenkt bzw. gekippt werden und der Rundballen auf seiner Stirnseite seitlich abgelegt werden. Dadurch wird unter anderem eine Wegrollbewegung zuverlässig vermieden und ein sicheres und einfaches Ablegen des Rundballens, insbesondere auch in abschüssigem und/oder hügeligem Gelände, ermöglicht.

In Ausgestaltung der Erfindung umfasst die Rundballenpresse eine Fahrachse, eine Ballenpresskammer, in der ein Rundballen erzeugbar ist, und der Entladevorrichtung, die sich entlang einer Längsachse der Rundballenpresse an die Ballenpresskammer anschliesst, wobei mit der Entladevorrichtung ein fertig gepresster Rundballen aus der Ballenpresskammer auf einen Boden entladbar ist. Die Entladevorrichtung kann insbesondere stromabwärts einer Vorwärtsrichtung zur Ballenpresskammer angeordnet sein.

Die Rundballenpresse kann auch ein Fahrgestell umfassen, insbesondere das Fahrgestellt die Fahrachse umfassen. Die Entladevorrichtung kann an der Fahrachse und/oder am Fahrgestell und/oder an der Ballenpresskammer angeordnet, insbesondere befestigt sein.

In Ausgestaltung der Erfindung weist die Rundballenpresse einen Neigungssensor zur Messung einer Neigung der Rundballenpresse und/oder ein Kommunikationsmodul zum Empfang einer Standortinformation der Rundballenpresse auf. Im Weiteren ist der Aktor in Abhängigkeit von der Neigung und/oder der Standortinformation der Rundballenpresse betreibbar. Mit dem Neigungssensor kann die Neigung gemessen werden, insbesondere ein Neigungswinkel der Rundballenpresse in Bezug zur Lotrichtung oder eine Änderung eines Neigungswinkels und/oder der Neigungswinkel in Bezug zur Gravitation der Erde. Die Standortinformation der Rundballenpresse kann die eigene Position der Rundballenpresse auf der Erdoberfläche oder in einem geeigneten geometrischen Bezugssystem sein. Die Standortinformation kann beispielsweise mittels des globalen Positionsbestimmungssystem (engl. Global Positioning System=GPS) ermittelt werden und mittels des Kommunikationsmoduls bereitgestellt bzw. empfangen werden. Das Kommunikationsmodul kann ein GPS-Gerät und/oder ein WLAN-Gerät und/oder ein Tablet und/oder Smartphone sein. Die Neigung und/oder die Standortinformation geben Auskunft darüber, ob sich die Rundballenpresse, insbesondere der aktuelle Arbeitsort der Rundballenpresse, in abschüssigem und/oder hügeligem Gelände befindet. Vorteilhafterweise kann somit die Rundballenpresse, insbesondere die Entladevorrichtung in Abhängigkeit von der Neigung und/oder der Standortinformation der Rundballenpresse, also in Abhängigkeit vom aktuellen Arbeitsort, betrieben werden. Darüber hinaus können die erste, zweite und dritte Entladeposition in Abhängigkeit von der Neigung und/oder der Standortinformation der Rundballenpresse eingestellt werden. In beiden Fällen kann ein sicheres Entladen des Rundballens, insbesondere in abschüssigem und/oder hügeligem Gelände, gewährleistet werden.

Die Erfindung betrifft weiter ein Entladeverfahren zum Entladen eines Rundballens einer Rundballenpresse nach einem der Ansprüche 1-6.

Die Rundballenpresse umfasst weiter eine Fahrachse, eine Ballenpresskammer, in der ein Rundballen erzeugt wird, und die Entladevorrichtung, die sich entlang einer Längsachse der Rundballenpresse an die Ballenpresskammer anschliesst, wobei mit der Entladevorrichtung ein fertig gepresster Rundballen aus der Ballenpresskammer auf einen Boden entladen wird. Die Entladevorrichtung umfasst einen Aktor und einen ersten langgestreckten Tragarm und einen zweiten langgestreckten Tragarm zur Entladung des fertig gepressten Rundballens. Der erste und zweite Tragarm werden verstellbar an der Rundballenpresse gelagert und der erste und zweite Tragarm werden mittels des Aktors in Abhängigkeit von einer Entladerichtung eines Rundballens verstellt.

Das erfindungsgemässe Entladeverfahren weist die oben beschriebenen Vorteile der erfindungsgemässen Rundballenpresse auf. Im Weiteren können die Entladevorrichtung und/oder die Rundballenpresse bei der Durchführung des erfindungsgemässen Entladeverfahrens verwendet werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Seitenansicht eines ersten Ausführungsbeispiels einer erfindungsgemässen Rundballenpresse mit Entladevorrichtung, und
- Fig. 2: eine schematische Draufsicht eines ersten Ausführungsbeispiels einer erfindungsgemässen Entladevorrichtung in der ersten Entladeposition, und
- Fig. 3: eine schematische Draufsicht eines ersten Ausführungsbeispiels einer erfindungsgemässen Entladevorrichtung in der zweiten Entladeposition, und
- Fig. 4: eine schematische Draufsicht eines ersten Ausführungsbeispiels einer erfindungsgemässen Entladevorrichtung in der dritten Entladeposition.

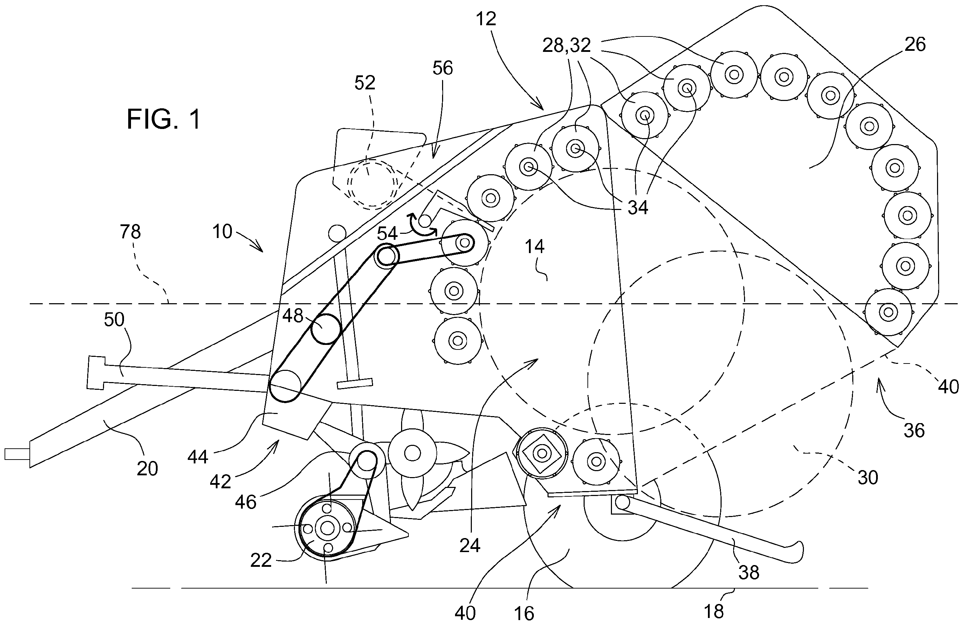

Figur 1 zeigt eine schematische Darstellung eines ersten Ausführungsbeispiels der erfindungsgemässen Rundballenpresse. Die in Figur 1 schematisch dargestellte Rundballenpresse 10 umfasst ein Gehäuse 12 mit einem Gehäuseteil 14, der sich mittels Rädern 16 auf einem Boden 18 abstützt und mittels einer Deichsel 20 an ein nicht gezeigtes Zugfahrzeug, z. B. einen Traktor oder Ackerschlepper, anschließbar ist.

An der vorderen unteren Seite des Gehäuseteils 14, also in Richtung oder entlang der Längsachse, im Speziellen in eine Vorwärtsfahrtrichtung der Rundballenpresse 10, befindet sich in bekannter Weise eine Aufnahme- und Zuführeinrichtung 22 für Erntegut. Das Gehäuse 12 weist weiter eine am Gehäuseteil 14 um eine Auswurfachse schwenkbar gelagerte Auswurfklappe 26 auf, die sich am rückwärtigen oberen Eckbereich des Gehäuseteils 14 befindet. Auf dem Gehäuseteil 14 und der Auswurfklappe 26 sind antreibbare Pressmittel 28 verteilt, die eine Ballenpresskammer 24 umfangsseitig begrenzen und durch welche eine rotationserzeugende oder rotationserhaltende Eingriffswirkung auf einen in der Ballenpresskammer 24 befindlichen Rundballen 30 erzeugbar ist. Somit bildet das Gehäuseteil 14 einen vorderen Teil der Ballenpresskammer 24 und die Auswurfklappe 26 einen hinteren Teil der Ballenpresskammer 24 aus.

Die Rundballenpresse 10, mit größenunveränderlicher Ballenpresskammer 24 ausgebildet, enthält eine Vielzahl zueinander parallel verlaufender Presselemente 28 zum Pressen von Erntegut in Form von Pressrollen 32 (exemplarisch wurden hier nur einige wenige Pressrollen 32 mit dem Bezugszeichen "32" versehen), deren Rotationsachsen 34 bei geschlossener Auswurfklappe 26 auf einem Kreisbogen gelegen sind, und von denen wenigstens einige angetrieben sind.

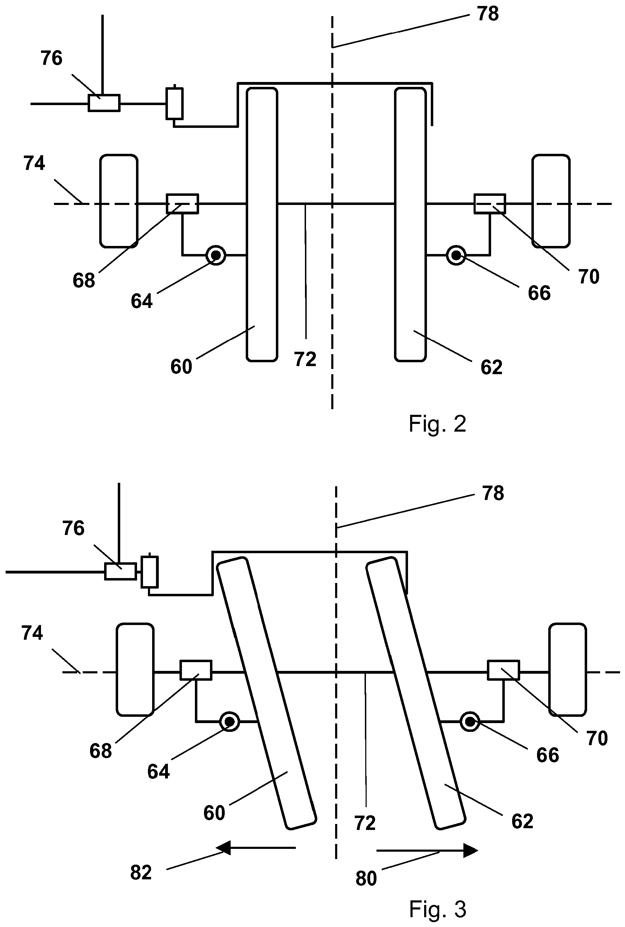

Die Auswurfklappe 26 kann mittels einer Stelleinrichtung (nicht gezeigt) betätigt werden (geöffnet und geschlossen werden). Dabei ist die Auswurfklappe 26 mittels der Stelleinrichtung derart schwenkbar, dass beim Öffnen der Auswurfklappe 26 eine Auswurföffnung 36 zwischen dem Gehäuseteil 14 und der Auswurfklappe 26 ausbildbar ist. Durch die Auswurföffnung 36 kann ein von der Rundballenpresse 10 fertig gepresster Rundballen 30 ausgeworfen bzw. entladen oder werden. Die Rundballenpresse 10 umfasst weiter ein Fahrgestell 40 und eine Fahrachse 72 und eine Entladevorrichtung 38, die sich entlang einer Längsachse 78 der Rundballenpresse 10 an die Ballenpresskammer 24 anschliesst. Mit der Entladevorrichtung 38 ist ein fertig gepresster Rundballen 30 aus der Ballenpresskammer 24 auf einen Boden 18 entladbar. Der Rundballen 30 bewegt sich dabei in Richtung der Auswurföffnung 36 und rollt auf die Entladevorrichtung 38, über welche der Rundballen 30 auf den Boden 18 geleitet werden kann. Die Fahrachse 72 (siehe Figur 2) ist in Richtung der Querachse 74 (siehe Figur 2) ausgerichtet.

Die Rundballenpresse 10 verfügt ferner über eine Antriebsanordnung 42 mit einer Getriebeanordnung 44, einem ersten Antriebsstrang 46 und einem zweiten Antriebsstrang 48. Eine Antriebswelle 50 ist mit einer Zapfwelle (nicht gezeigt) des Zugfahrzeugs oder Schleppers verbindbar und dient als Antrieb für die Antriebsanordnung 36. Der erste Antriebsstrang 46 steht über einen ersten Abtrieb (nicht gezeigt) und der zweite Antriebsstrang 48 über einen zweiten Abtrieb (nicht gezeigt) der Getriebeanordnung 44 mit dieser in Antriebsverbindung. Der erste Antriebsstrang 46 treibt die Aufnahme- und Zuführeinrichtung 22 an, wobei der zweite Antriebsstrang 48 zum Antreiben der Pressmittel 28 bzw. der Pressrollen 32 vorgesehen ist. Die Antriebsstränge 46, 48 umfassen alle Antriebskomponenten, die in bekannter Weise in Rundballenpressen zum Antreiben der Aufnahme- und Zuführeinrichtung 22 bzw. zum Antreiben der Pressmittel 28 angeordnet sind und antriebsseitig mit dem ersten Abtrieb bzw. dem zweiten Abtrieb der Getriebeanordnung 44 verbunden sind.

Ferner umfasst die Rundballenpresse 10 eine Wickelvorrichtung 56, die mit einer Netz- oder Folienrolle 52 als Wickelmaterial bestückt ist. Die Wickelvorrichtung 56 umfasst eine Wickelmaterialzuführung 54, die das Wickelmaterial von der Netz- bzw. Folienrolle 52 in den Ballenpresskammer 24 führt. An Stelle einer Wickelvorrichtung 56 kann auch eine Bindevorrichtung (nicht gezeigt) mit Bindegarn, ebenfalls in bekannter Weise, zum Einsatz kommen.

Während eines Pressvorgangs werden der erste und der zweite Antriebsstrang 46, 48 über die Getriebeanordnung 44 bzw. über den Antrieb und den Abtrieben parallel angetrieben, so dass die Aufnahme- und Zuführeinrichtung 22 als auch die Pressmittel 28, 32 zeitgleich mit konstantem Drehzahlverhältnis zueinander in Betrieb gehalten werden. Nachdem die Erntegutaufnahme und Bildung des Rundballens 30 durch die Pressrollen 32, abgeschlossen ist, kann, muss aber nicht, die Fahrt über den Boden 18 unterbrochen werden, da die Rundballenpresse 10 mit dem Rundballen 30 gefüllt ist und kein weiteres Erntegut mehr in die Ballenpresskammer 24 aufgenommen werden soll bzw. kann. Zu dieser Zeit wird auch die Wickelvorrichtung 56 aktiviert, die einen Wickel- bzw. Bindevorgang eingeleitet. Dabei wird durch eine anhaltende Drehung des sich in der Ballenpresskammer 24 befindlichen Rundballens das Wickelmaterial um den Rundballen 30 gewickelt. Nachdem ein Wickelvorgang abgeschlossen ist geht der Pressvorgang in den Entladevorgang über und der Rundballen 30 wird durch Öffnen der Auslassklappe 26 über die Auswurföffnung und die Entladevorrichtung 38 auf den Boden 18 abgelassen.

Ein wesentliches Problem beim Entladen eines Rundballens 30 aus der Ballenpresskammer 24 über die Entladevorrichtung 38 der Rundballenpresse 10 ist das Problem der Kontrolle über dessen Bewegung, im Speziellen die Entladerichtung, also die Richtung in die der Rundballen 30 abgelegt werden soll oder wird. Das Festlegen einer Entladerichtung, insbesondere das gezielte und kontrollierte Entladen des Rundballens 30 in eine festgelegte Richtung ist mit den bekannten Entladevorrichtung 38 und/oder Rundballenpressen 10 und/oder Entladeverfahren nicht oder nur schwer möglich.

Um eine Entladeposition des Rundballens 30 wählen und festlegen zu können, umfasst die hier ausgebildeten Entladevorrichtung 38 zum Entladen eines Rundballens 30 einer Rundballenpresse 10 einen ersten Tragarm 60 zur Entladung eines Rundballens 30 und einen zweiten Tragarm 62 zur Entladung eines Rundballens 30 und einen Aktor 76. Dabei sind der erste und zweite Tragarm 60, 62 verstellbar an einer Rundballenpresse 10 lagerbar und der erste und zweite Tragarm 60, 62 sind mittels des Aktors 76 in Abhängigkeit von einer Entladerichtung eines Rundballens 30 verstellbar.

Auf diese Weise kann der Rundballen 30 nach dem oder beim Verlassen der Ballenpresskammer 24 von der Entladevorrichtung 38 aufgenommen und mit dieser in mindestens drei Entladerichtungen wegbewegt und entladen werden. Die Entladerichtung des fertig gepressten Rundballens 30 kann also mittels dem Aktor 76 und dem ersten und zweiten Tragarm 60, 62 gesteuert und eingestellt werden. Eine Bewegung des ersten und zweiten Tragarm 60, 62 in Abhängigkeit von der Entladerichtung hat somit den Vorteil, dass der Rundballen 30 nicht nur hinter der Rundballenpresse 10 abgelegt werden kann, sondern auch gezielt in eine erste und zweite Richtung 80, 82 gekippt werden kann.

Figur 2 zeigt eine schematische Draufsicht eines ersten Ausführungsbeispiels einer erfindungsgemässen Entladevorrichtung 38, insbesondere mit Teilen der Rundballenpresse 10, in der ersten Entladeposition. Die in Figur 2 gezeigte Entladevorrichtung 38 entspricht im Wesentlichen der in Figur 1 gezeigten Entladevorrichtung 38 an der Rundballenpresse 10, sodass im Folgenden lediglich auf die Unterschiede eingegangen wird. Der erste Tragarm 60 ist mittels eines ersten Lagers 68 und der zweite Tragarm 62 mittels eines zweiten Lagers 70 um die erste und zweite Lagerachse 64, 66 schwenkbar an der Rundballenpresse 10 gelagert. Das erste und zweite Lager 68, 70 sind ausserdem an der Fahrachse 72 schwenkbar angeordnet, insbesondere schwenkbar gelagert und/oder befestigt, sodass der erste und/oder zweite Tragarm 60, 62 auch um die Querachse 74 der Rundballenpresse 10 schwenkbar an der Rundballenpresse 10 gelagert sind. Das erste und zweite Lager dienen somit schwenkbaren Anlenkung des ersten und zweiten Tragarms 60, 62 in Richtung oder entlang der Fahrachse 72 und/oder quer zur Längs- und quer zur Querachse der Rundballenpresse 10.

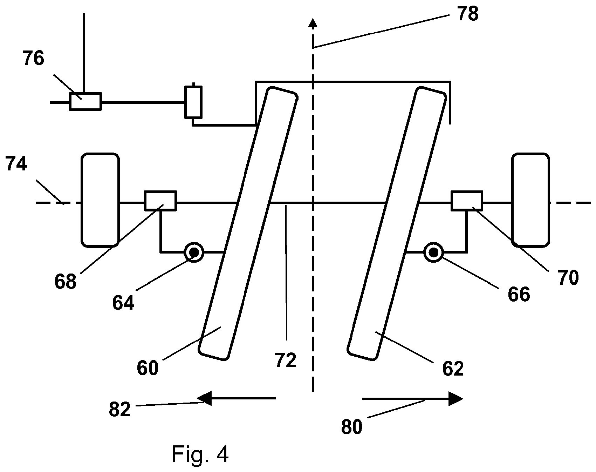

Der erste und zweite Tragarm 60, 62 sind zwischen ersten Entladeposition (Figur 2), in der der erste und zweite Tragarm 60, 62 entlang der Längsachse 78 der Rundballenpresse 10 ausgerichtet sind, und einer zweite Entladeposition (siehe Figur 3), in der der erste und zweite Tragarm 60, 62 in eine erste Richtung entlang der Fahrachse 72 verstellt und ausgerichtet werden, und einer dritte Entladeposition (siehe Figur 4) beweglich, in der der erste und zweite Tragarm 60, 62 in eine zweite Richtung, die zur ersten Richtung entgegengesetzt ist, verstellt und ausgerichtet werden.

Der erste und zweite Tragarm 60, 62 sind mittels des Aktors 76 derart einstellbar, dass der erste und zweite Tragarm 60, 62 in der ersten Entladeposition sind, wenn der Rundballen 30 in Richtung der Längsachse 78 nach hinten, also hinter die Rundballenpresse 10, entladen wird. Der Rundballen 30 kann hierbei mittels des ersten und zweiten Tragarms 60, 62 entlang der Längsachse 78 auf einen Boden 18 abgerollt wird. In der ersten Entladeposition können der erste und zweite Tragarm 60, 62 mittels des Aktors 76 derart einstellbar sein, dass der erste und zweite Tragarm 60, 62 nur um die Fahrachse 72 schwenkbar sind. Der erste und zweite Tragarm 60, 62 sind mit dem Aktor 76 verbunden und mittels des Aktors 76 am ersten und zweiten Wirkschenkels (nicht gezeigt) einstellbar.

Figur 3 zeigt eine schematische Draufsicht eines ersten Ausführungsbeispiels einer erfindungsgemässen Entladevorrichtung 38, insbesondere mit Teilen der Rundballenpresse 10, in der zweite Entladeposition. Die in Figur 3 gezeigte Entladevorrichtung 38 entspricht im Wesentlichen der in den Figuren 1 und 2 gezeigten Entladevorrichtung 38, sodass im Folgenden lediglich auf die Unterschiede eingegangen wird. Der erste und zweite Tragarm 60, 62 sind mittels des Aktors 76 in die erste Richtung 80 verstellt, also mittels des Aktors 76 in die zweite Entladeposition bewegt worden. Ausserdem ist in der zweiten Entladeposition nur der erste Tragarm 60 um die Querachse 74, insbesondere die Fahrachse 72, und/oder die erste Lagerachse 64 schwenkbar. Der Rundballen 30 wird dadurch beim Entladen mittels des ersten und zweiten Tragarms 60, 62 in die zweite Richtung 82 entladen, also auf den Boden 18 abgerollt und in eine zweite Richtung 82 gekippt.

Figur 4 zeigt eine schematische Draufsicht eines ersten Ausführungsbeispiels einer erfindungsgemässen Entladevorrichtung 38, insbesondere mit Teilen der Rundballenpresse 10, in der dritten Entladeposition. Die in Figur 4 gezeigte Entladevorrichtung 38 entspricht im Wesentlichen der in den Figuren 1, 2 und 3 gezeigten Entladevorrichtung 38, sodass im Folgenden lediglich auf die Unterschiede eingegangen wird. Der erste und zweite Tragarm 60, 62 sind mittels des Aktors 76 in die zweite Richtung 82 verstellt, also mittels des Aktors 76 von der ersten Entladeposition in die dritten Entladeposition bewegt worden. Ausserdem ist in der dritten Entladeposition nur der zweite Tragarm 62 um die Querachse 74, insbesondere die Fahrachse 72, und/oder die zweite Lagerachse 66 schwenkbar. Der Rundballen 30 wird also beim Entladen mittels des ersten und zweiten Tragarms 60, 62 in die erste Richtung 80 entladen, also auf den Boden 18 abgerollt und in eine erste Richtung 80 gekippt.

## Patentansprüche

1. Rundballenpresse, umfassend eine Fahrachse (72), eine Ballenpresskammer (24), in der ein Rundballen (30) erzeugbar ist, und einer Entladevorrichtung (38) zum Entladen des Rundballens (30), die sich entlang einer Längsachse der Rundballenpresse (10) an die Ballenpresskammer (24) anschliesst, wobei mit der Entladevorrichtung (38) der fertig gepresste Rundballen (30) aus der Ballenpresskammer (24) auf einen Boden (18) entladbar ist, die Entladevorrichtung (38) umfasst einen ersten Tragarm (60) zur Entladung des Rundballens (30) und einen zweiten Tragarm (62) zur Entladung des Rundballens (30) und einen Aktor (76), wobei der erste und zweite Tragarm (60, 62) verstellbar an der Rundballenpresse (10) gelagert sind, und der erste und zweite Tragarm (60, 62) mittels des Aktors (76) in Abhängigkeit von einer Entladerichtung des Rundballens (30) verstellbar sind, und der erste und zweite Tragarm (60, 62) zwischen einer ersten Entladeposition, in der der erste und zweite Tragarm (60, 62) entlang einer Längsachse (78) der Rundballenpresse (10) ausgerichtet sind, und einer zweiten Entladeposition, in der der erste und zweite Tragarm (60, 62) in eine erste Richtung (80) entlang einer Querachse (74) verstellt werden, und einer dritten Entladeposition beweglich sind, in der der erste und zweite Tragarm (60, 62) in eine zweite Richtung (82), die zur ersten Richtung (80) entgegengesetzt ist, verstellt werden, wobei der erste Tragarm (60) um eine erste Lagerachse (64) und der zweite Tragarm (62) um eine zweite Lagerachse (66) schwenkbar an der Rundballenpresse (10) gelagert sind, **dadurch gekennzeichnet, dass** der erste und zweite Tragarm (60, 62) mittels des Aktors (76) derart einstellbar sind, dass der erste und zweite Tragarm (60, 62) in der ersten Entladeposition sind und der erste und zweite Tragarm (60, 62) in der ersten Entladeposition nur um die Querachse (74) schwenkbar sind, wenn der Rundballen (30) in Richtung der Längsachse (78) entladen wird, dass der Aktor (76)
den ersten und zweiten Tragarm (60, 62) in die zweite Entladeposition bewegt und in der zweiten Entladeposition der erste Tragarm während des Entladevorgangs mittels des Aktors derart einstellbar ist, dass der erste Tragarm eine unabhängige Rotationsbewegung um die Querachse und/oder die erste Lagerachse ausführen kann, während der zweite Tragarm mittels des Aktors in der zweiten Entladeposition festhaltbar ist, wenn der Rundballen (30) in die zweite Richtung (82) entladen wird, dass der Aktor (76) den ersten und zweiten Tragarm (60, 62) in die dritte Entladeposition bewegt und in der dritten Entladeposition der zweite Tragarm während des Entladevorgangs mittels des Aktors derart einstellbar ist, dass der zweite Tragarm eine unabhängige Rotationsbewegung um die Querachse und/oder die zweite Lagerachse ausführen kann, während der erste Tragarm mittels des Aktors in der dritten Entladeposition festhaltbar ist, wenn der Rundballen (30) in die erste Richtung (80) entladen wird.

2. Rundballenpresse nach Anspruch 1, **dadurch gekennzeichnet, dass** der erste Tragarm (60) in einen ersten Abrollschenkel zum Abrollen des Rundballens (30) und einen ersten Wirkschenkel unterteilt ist und der zweite Tragarm (62) in einen zweiten Abrollschenkel zum Abrollen des Rundballens (30) und einen zweiten Wirkschenkel unterteilt ist.

3. Rundballenpresse nach einem der Ansprüche 1 oder 2, **dadurch gekennzeichnet, dass** der erste und/oder zweite Abrollschenkel einen Radius aufweist.

4. Rundballenpresse nach einem der Ansprüche 1 bis 3, **dadurch gekennzeichnet, dass** die Entladevorrichtung (38) an der Fahrachse (72) und/oder an einem Fahrgestell (40) und/oder der Ballenpresskammer (24) angeordnet ist.

5. Rundballenpresse nach einem der Ansprüche 1 bis 4, **dadurch gekennzeichnet, dass** die Rundballenpresse (10) einen Neigungssensor zur Messung einer Neigung der Rundballenpresse (10) und/oder ein Kommunikationsmodul zum Empfang einer Standortinformation der Rundballenpresse (10) aufweist.

6. Rundballenpresse nach einem der Ansprüche 1 bis 5, **dadurch gekennzeichnet, dass** der Aktor (76) in Abhängigkeit von der Neigung und/oder der Standortinformation der Rundballenpresse (10) betreibbar ist.

7. Entladeverfahren zum Entladen eines Rundballens einer Rundballenpresse (10) nach einem der Ansprüche 1 bis 6, wobei die Rundballenpresse (10) eine Fahrachse (72), eine Ballenpresskammer (24), in der der Rundballen (30) erzeugt wird, und eine Entladevorrichtung (38) umfasst, die sich entlang einer Längsachse (78) der Rundballenpresse (10) an die Ballenpresskammer (24) anschliesst, wobei mit der Entladevorrichtung (38) der fertig gepresste Rundballen (30) aus der Ballenpresskammer (24) auf einen Boden (18) entladen wird, und die Entladevorrichtung (38) einen Aktor (76) und einen ersten Tragarm (60) und einen zweiten Tragarm (62) zur Entladung des fertig gepressten Rundballens (30) umfasst, wobei der erste und zweite Tragarm (60, 62) verstellbar an der Rundballenpresse (10) gelagert werden, und der erste und zweite Tragarm (60, 62) mittels des Aktors (76) in Abhängigkeit von einer Entladerichtung des Rundballens (30) verstellt werden, und der erste und zweite Tragarm (60, 62) zwischen einer ersten Entladeposition, in der der erste und zweite Tragarm (60, 62) entlang einer Längsachse (78) der Rundballenpresse (10) ausgerichtet sind, und einer zweiten Entladeposition, in der der erste und zweite Tragarm (60, 62) in eine erste Richtung (80) entlang einer Querachse (74) verstellt werden, und einer dritten Entladeposition bewegt werden, in der der erste und zweite Tragarm (60, 62) in eine zweite Richtung (82), die zur ersten Richtung (80) entgegengesetzt ist, verstellt werden, wobei der erste Tragarm (60) um eine erste Lagerachse (64) und der zweite Tragarm (62) um eine zweite Lagerachse (66) schwenkbar an der Rundballenpresse (10) gelagert sind, **dadurch gekennzeichnet, dass** der erste und zweite Tragarm (60, 62) mittels des Aktors (76) derart eingestellt werden, dass der erste und zweite Tragarm (60, 62) in der ersten Entladeposition sind und der erste und zweite Tragarm (60, 62) in der ersten Entladeposition nur um die Querachse (74) schwenkbar sind, wenn der Rundballen (30) in Richtung der Längsachse (78) entladen wird, dass der Aktor (76) den ersten
und zweiten Tragarm (60, 62) in die zweite Entladeposition bewegt und in der zweiten Entladeposition der erste Tragarm während des Entladevorgangs mittels des Aktors derart eingestellt wird, dass der erste Tragarm eine unabhängige Rotationsbewegung um die Querachse und/oder die erste Lagerachse ausführen kann, während der zweite Tragarm mittels des Aktors in der zweiten Entladeposition festgehalten wirdt, wenn der Rundballen (30) in die zweite Richtung (82) entladen wird, dass der Aktor (76) den ersten und zweiten Tragarm (60, 62) in die dritte Entladeposition bewegt und in der dritten Entladeposition der zweite Tragarm während des Entladevorgangs mittels des Aktors derart eingestellt wird, dass der zweite Tragarm eine unabhängige Rotationsbewegung um die Querachse und/oder die zweite Lagerachse ausführen kann, während der erste Tragarm mittels des Aktors in der dritten Entladeposition festgehalten wird, wenn der Rundballen (30) in die erste Richtung (80) entladen wird.

## Claims

1. Round baler, comprising a drive axle (72), a bale pressing chamber (24), in which a round bale (30) can be produced, and an unloading device (38) for unloading the round bale (30), said unloading device adjoining the bale pressing chamber (24) along a longitudinal axis of the round baler (10), wherein the unloading device (38) can be used to unload the fully pressed round bale (30) from the bale pressing chamber (24) onto the ground (18), the unloading device (38) comprising a first supporting arm (60) for unloading the round bale (30) and a second supporting arm (62) for unloading the round bale (30), and an actuator (76), wherein the first and second supporting arms (60, 62) are mounted displaceably on the round baler (10), and the first and second supporting arms (60, 62) are displaceable by means of the actuator (76) in accordance with an unloading direction of the round bale (30), and the first and second supporting arms (60, 62) are movable between a first unloading position, in which the first and second supporting arms (60, 62) are oriented along a longitudinal axis (78) of the round baler (10), and a second unloading position, in which the first and second supporting arms (60, 62) are displaced in a first direction (80) along a transverse axis (74), and a third unloading position, in which the first and second supporting arms (60, 62) are displaced in a second direction (82) which is opposite to the first direction (80), wherein the first supporting arm (60) is mounted pivotably on the round baler (10) about a first bearing axis (64) and the second supporting arm (62) is mounted pivotably on the round baler (10) about a second bearing axis (66), **characterized in that** the first and second supporting arms (60, 62) are adjustable by means of the actuator (76), such that the first and second supporting arms (60, 62) are in the first unloading position, and, in the first unloading position, the first and second supporting arms (60, 62) are only pivotable about the transverse axis (74) when the round bale (30) is unloaded in the direction of the longitudinal axis (78), **in that** the actuator (76) moves the first and second supporting arms (60, 62) into the second unloading position, and, in the second unloading position, the first supporting arm is adjustable by means of the actuator during the unloading operation, such that the first supporting arm can execute an independent rotational movement about the transverse axis and/or the first bearing axis while the second supporting arm can be held in the second unloading position by means of the actuator when the round bale (30) is unloaded in the second direction (62), **in that** the actuator (76) moves the first and second supporting arms (60, 62) into the third unloading position and, in the third unloading position, the second supporting arm is adjustable by means of the actuator during the unloading operation, such that the second supporting arm can execute an independent rotational movement about the transverse axis and/or the second bearing axis, while the first supporting arm can be held in the third unloading position by means of the actuator when the round bale (30) is unloaded in the first direction (80).

2. Round baler according to Claim 1, **characterized in that** the first supporting arm (60) is divided into a first rolling limb for rolling the round bale (30) and a first working limb, and the second supporting arm (62) is divided into a second rolling limb for rolling the round bale (30) and a second working limb.

3. Round baler according to either of Claims 1 and 2, **characterized in that** the first and/or second rolling limb has a radius.

4. Round baler according to one of Claims 1 to 3, **characterized in that** the unloading device (38) is arranged on the drive axle (72) and/or on a chassis (40) and/or on the bale pressing chamber (24).

5. Round baler according to one of Claims 1 to 4, **characterized in that** the round baler (10) has an inclination sensor for measuring an inclination of the round baler (10) and/or a communication module for receiving location information of the round baler (10).

6. Round baler according to one of Claims 1 to 5, **characterized in that** the actuator (76) is operable in accordance with the inclination and/or the location information of the round baler (10).

7. Unloading method for unloading a round bale of a round baler (10) according to one of Claims 1 to 6, wherein the round baler (10) comprises a drive axle (72), a bale pressing chamber (24), in which the round bale (30) is produced, and an unloading device (38) which adjoins the bale pressing chamber (24) along a longitudinal axis (78) of the round baler (10), wherein the unloading device is used to unload the fully pressed round bale (30) from the bale pressing chamber (24) onto the ground (18), and the unloading device (38) comprises an actuator (76) and a first supporting arm (60) and a second supporting arm (62) for unloading the fully pressed round bale (30), wherein the first and second supporting arms (60, 62) are mounted displaceably on the round baler (10), and the first and second supporting arms (60, 62) are displaced by means of the actuator (76) in accordance with an unloading direction of the round bale (30), and the first and second supporting arms (60, 62) are moved between a first unloading position, in which the first and second supporting arms (60, 62) are oriented along a longitudinal axis (78) of the round baler (10), and a second unloading position, in which the first and second supporting arms (60, 62) are displaced in a first direction (80) along a transverse axis (74), and a third unloading position, in which the first and second supporting arms (60, 62) are displaced in a second direction (82) which is opposite to the first direction (80), wherein the first supporting arm (60) is mounted pivotably on the round baler (10) about a first bearing axis (64) and the second supporting arm (62) is mounted pivotably on the round baler (10) about a second bearing axis (66), **characterized in that** the first and second supporting arms (60, 62) are adjusted by means of the actuator (76), such that the first and second supporting arms (60, 62) are in the first unloading position, and, in the first unloading position, the first and second supporting arms (60, 62) are only pivotable about the transverse axis (74) when the round bale (30) is unloaded in the direction of the longitudinal axis (78), **in that** the actuator (76) moves the first and second supporting arms (60, 62) into the second unloading position, and, in the second unloading position, the first supporting arm is adjusted by means of the actuator during the unloading operation, such that the first supporting arm can execute an independent rotational movement about the transverse axis and/or the first bearing axis while the second supporting arm is held in the second unloading position by means of the actuator when the round bale (30) is unloaded in the second direction (62), **in that** the actuator (76) moves the first and second supporting arms (60, 62) into the third unloading position and, in the third unloading position, the second supporting arm is adjusted by means of the actuator during the unloading operation, such that the second supporting arm can execute an independent rotational movement about the transverse axis and/or the second bearing axis, while the first supporting arm is held in the third unloading position by means of the actuator when the round bale (30) is unloaded in the first direction (80).

## Revendications

1. Presses à balles rondes, comportant un essieu de roulement (72), une chambre de mise en balle (24), dans laquelle une balle ronde (30) peut être produite, et un dispositif de déchargement (38) pour le déchargement de la balle ronde (30), lequel est adjacent à la chambre de mise en balle (24) le long d'un axe longitudinal de la presse à balles rondes (10), la balle ronde (30) pressée finie pouvant être déchargée de la chambre de mise en balle (24) sur un sol (18) à l'aide du dispositif de déchargement (38), le dispositif de déchargement (38) comportant un premier bras de support (60) pour le déchargement de la balle ronde (30) et un deuxième bras de support (62) pour le déchargement de la balle ronde (30) et un actionneur (76), le premier et le deuxième bras de support (60, 62) étant montés de manière déplaçable sur la presse à balles rondes (10), et le premier et le deuxième bras de support (60, 62) étant déplaçables au moyen de l'actionneur (76) en fonction d'un sens de déchargement de la balle ronde (30), et le premier et le deuxième bras de support (60, 62) étant mobiles entre une première position de déchargement, dans laquelle le premier et le deuxième bras de support (60, 62) sont orientés le long d'un axe longitudinal (78) de la presse à balles rondes (10), et une deuxième position de déchargement, dans laquelle le premier et le deuxième bras de support (60, 62) sont déplacés dans un premier sens (80) le long d'un axe transversal (74), et une troisième position de déchargement, dans laquelle le premier et le deuxième bras de support (60, 62) sont déplacés dans un deuxième sens (82) qui est opposé au premier sens (80), le premier bras de support (60) étant monté pivotant autour d'un premier axe de palier (64) et le deuxième bras de support (62) étant monté pivotant autour d'un deuxième axe de palier (66) sur la presse à balles rondes (10), **caractérisée en ce que** le premier et le deuxième bras de support (60, 62) sont réglables au moyen de l'actionneur (76) de telle sorte que le premier et le deuxième bras de support (60, 62) soient dans la première position de déchargement et le premier et le deuxième bras de support (60, 62) dans la première position de déchargement n'étant pivotants autour de l'axe transversal (74) que lorsque la balle ronde (30) est déchargée dans la direction de l'axe longitudinal (78), **en ce que** l'actionneur (76) déplace le premier et le deuxième bras de support (60, 62) dans la deuxième position de déchargement et, dans la deuxième position de déchargement, le premier bras de support peut être réglé au moyen de l'actionneur pendant l'opération de déchargement de telle sorte que le premier bras de support puisse effectuer un mouvement de rotation indépendant autour de l'axe transversal et/ou du premier axe de palier, tandis que le deuxième bras de support peut être retenu dans la deuxième position de déchargement au moyen de l'actionneur, lorsque la balle ronde (30) est déchargée dans le deuxième sens (82), **en ce que** l'actionneur (76) déplace le premier et le deuxième bras de support (60, 62) dans la troisième position de déchargement et, dans la troisième position de déchargement, le deuxième bras de support peut être réglé au moyen de l'actionneur pendant l'opération de déchargement de telle sorte que le deuxième bras de support puisse effectuer un mouvement de rotation indépendant autour de l'axe transversal et/ou du deuxième axe de palier, tandis que le premier bras de support peut être retenu dans la troisième position de déchargement au moyen de l'actionneur, lorsque la balle ronde (30) est déchargée dans le premier sens (80).

2. Presses à balles rondes selon la revendication 1, **caractérisée en ce que** le premier bras de support (60) est divisé en une première branche de roulement pour le roulement de la balle ronde (30) et une première branche active et le deuxième bras de support (62) est divisé en une deuxième branche de roulement pour le roulement de la balle ronde (30) et une deuxième branche active.

3. Presses à balles rondes selon l'une des revendications 1 ou 2, **caractérisée en ce que** la première et/ou la deuxième branche de roulement présente(nt) un rayon.

4. Presses à balles rondes selon l'une des revendications 1 à 3, **caractérisée en ce que** le dispositif de déchargement (38) est disposé sur l'essieu de roulement (72) et/ou sur un châssis (40) et/ou sur la chambre de mise en balle (24).

5. Presses à balles rondes selon l'une des revendications 1 à 4, **caractérisée en ce que** la presse à balles rondes (10) comprend un capteur d'inclinaison pour la mesure d'une inclinaison de la presse à balles rondes (10) et/ou un module de communication pour la réception d'une information de position de la presse à balles rondes (10).

6. Presses à balles rondes selon l'une des revendications 1 à 5, **caractérisée en ce que** l'actionneur (76) peut fonctionner en fonction de l'inclinaison et/ou de l'information de position de la presse à balles rondes (10) .

7. Procédé de déchargement d'une balle ronde d'une presse à balles rondes (10) selon l'une des revendications 1 à 6, la presse à balles rondes (10) comportant un essieu de roulement (72), une chambre de mise en balle (24), dans laquelle la balle ronde (30) est produite, et un dispositif de déchargement (38) qui est adjacent à la chambre de mise en balle (24) le long d'un axe longitudinal (78) de la presse à balles rondes (10), la balle ronde (30) pressée finie étant déchargée de la chambre de mise en balle (24) sur un sol (18) à l'aide du dispositif de déchargement (38), et le dispositif de déchargement (38) comportant un actionneur (76) et un premier bras de support (60) et un deuxième bras de support (62) pour le déchargement de la balle ronde (30) pressée finie, le premier et le deuxième bras de support (60, 62) étant montés de manière déplaçable sur la presse à balles rondes (10), et le premier et le deuxième bras de support (60, 62) étant déplacés au moyen de l'actionneur (76) en fonction d'un sens de déchargement de la balle ronde (30), et le premier et le deuxième bras de support (60, 62) étant mobiles entre une première position de déchargement, dans laquelle le premier et le deuxième bras de support (60, 62) sont orientés le long d'un axe longitudinal (78) de la presse à balles rondes (10), et une deuxième position de déchargement, dans laquelle le premier et le deuxième bras de support (60, 62) sont déplacés dans un premier sens (80) le long d'un axe transversal (74), et une troisième position de déchargement, dans laquelle le premier et le deuxième bras de support (60, 62) sont déplacés dans un deuxième sens (82) qui est opposé au premier sens (80), le premier bras de support (60) étant monté pivotant autour d'un premier axe de palier (64) et le deuxième bras de support (62) étant monté pivotant autour d'un deuxième axe de palier (66) sur la presse à balles rondes (10), **caractérisé en ce que** le premier et le deuxième bras de support (60, 62) sont réglés au moyen de l'actionneur (76) de telle sorte que le premier et le deuxième bras de support (60, 62) soient dans la première position de déchargement et le premier et le deuxième bras de support (60, 62) dans la première position de déchargement n'étant pivotants autour de l'axe transversal (74) que lorsque la balle ronde (30) est déchargée dans la direction de l'axe longitudinal (78), **en ce que** l'actionneur (76) déplace le premier et le deuxième bras de support (60, 62) dans la deuxième position de déchargement et, dans la deuxième position de déchargement, le premier bras de support est réglé au moyen de l'actionneur pendant l'opération de déchargement de telle sorte que le premier bras de support puisse effectuer un mouvement de rotation indépendant autour de l'axe transversal et/ou du premier axe de palier, tandis que le deuxième bras de support est retenu dans la deuxième position de déchargement au moyen de l'actionneur, lorsque la balle ronde (30) est déchargée dans le deuxième sens (82), **en ce que** l'actionneur (76) déplace le premier et le deuxième bras de support (60, 62) dans la troisième position de déchargement et, dans la troisième position de déchargement, le deuxième bras de support est réglé au moyen de l'actionneur pendant l'opération de déchargement de telle sorte que le deuxième bras de support puisse effectuer un mouvement de rotation indépendant autour de l'axe transversal et/ou du deuxième axe de palier, tandis que le premier bras de support est retenu dans la troisième position de déchargement au moyen de l'actionneur, lorsque la balle ronde (30) est déchargée dans le premier sens (80).
